# EUROPÄISCHE PATENTSCHRIFT

(11) **EP 3 646 436 B1**
(45) Veröffentlichungstag und Bekanntmachung des Hinweises auf die Patenterteilung: **25.08.2021**
(21) Anmeldenummer: 18728103.5
(22) Anmeldetag: 28.05.2018
(51) Int. Cl.: H02K 1/27, H02K 1/28, H02K 7/00, H02K 7/08, H02K 7/14, H02K 11/028, H02K 11/40, H01R 39/64, H02K 5/173, H02K 21/22, F16C 19/06, F16C 41/00

(54) **ELEKTROMOTOR**
ELECTRIC MOTOR
MOTEUR ÉLECTRIQUE

(30) Priorität: 28.06.2017 DE 102017210868
(43) Veröffentlichungstag der Anmeldung: 06.05.2020
(73) Patentinhaber: Robert Bosch GmbH, 70442 Stuttgart (DE)
(72) Erfinder: GOMMENGINGER, Charles, 67160 Oberlauterbach (FR); KALCHSCHMIDT, Peter, 76646 Bruchsal Untergromb (DE); MERZ, Harald, 76547 Sinzheim (DE)
(86) Internationale Anmeldenummer: PCT/EP2018/063902
(87) Internationale Veröffentlichungsnummer: WO 2019/001865

(56) Entgegenhaltungen:
- WO-A2-2013/098309
- DE-A1- 10 162 818
- JP-A- S61 218 344
- US-A- 5 454 724

## Beschreibung

Die Erfindung geht aus von einem Elektromotor mit einem Kontaktierelement nach Gattung der unabhängigen Ansprüche.

### Stand der Technik

Bei der elektromechanischen Kommutierung von Motoren entstehen elektromagnetische Wellen, welche in die Umgebung abgestrahlt werden. Diese auftretenden elektromagnetischen Wellen gilt es abzuschirmen.

Aus der DE 10 2012 201 545 A1 ist eine Vorrichtung zum Abschirmen von elektromagnetischer Störstrahlung eines Elektromotors bekannt, welcher mittels eines getakteten Signals angesteuert wird. Es ist vorgesehen, dass der Rotor mit der Motorwelle über ein elektrisch leitendes Verbindungselement verbunden ist, wobei das Verbindungselement an der Stirnseite des Rotorbauteils befestigt ist. WO2013/098309 und JPS61218344 beschreiben weitere Lüfter mit einem Verbindungselement zwischen dem Rotor und der Motorwelle.

### Offenbarung der Erfindung

### Vorteile der Erfindung

Die Erfindung geht von einem Lüftersystem mit einem Elektromotor, insbesondere Außenläufermotor und einem Lüfterrad, wobei der Elektromotor einen Rotor aufweist und der Rotor um eine Motorwelle, welche eine Stirnfläche aufweist, drehbar gelagert ist und wobei das Lüfterrad auf dem Rotor drehfest angeordnet ist. Es wird vorgeschlagen, dass am Lüfterrad ein Kontaktierelement befestigt ist, welches dazu ausgebildet ist im montierten Zustand an der Stirnfläche der Motorwelle und dem Rotor elektrisch kontaktierend anzuliegen.

Das erfindungsgemäße Lüftersystem mit dem erfindungsgemäßen Verfahren mit den Merkmalen der unabhängigen Ansprüche hat den Vorteil, dass das Kontaktierungselement besonders einfach gemeinsam mit dem Lüfterrad als eine Einheit montiert und gleichzeitig auf ein zusätzliches Befestigen des Kontaktierelementes mit dem Rotor verzichtet werden kann. Ferner kann das Kontaktierelement über das Lüfterrad einfach zentriert werden, sodass es exakt in Richtung einer Rotationsachse des Elektromotors ausgerichtet ist. Da die Kontaktierung der Motorwelle zusätzlich stirnseitig an der Motorwelle erfolgt, können ungewollte Quietschgeräusche minimiert werden, welche insbesondere bei einer radialen Kontaktierung der Motorwelle häufig auftreten und als störend empfunden werden. Diese ungewünschten Quietschgeräusche bei einer radialen Kontaktierung entstehen häufig durch Eigenschwingungen in welche die Komponenten durch ungleichmäßiges Reiben und Gleiten der radialen Kontaktierung an der Motorwelle geraten.

Im Rahmen der vorliegenden Erfindung kann unter dem Begriff Motorwelle ein gegenständliches Maschinenelement verstanden werden, welches ein Drehmoment überträgt. Weiterhin wird im Folgenden unter dem Begriff einer Drehachse eine gedachte Achse verstanden, um welche der Rotor, im Sinne einer Rotationsachse rotiert. Im Unterschied zur Motorwelle, welches ein gegenständliches Maschinenelement darstellt, handelt es sich bei der Drehachse um eine rein gedachte Achse.

Ferner kann im Rahmen der vorliegenden Erfindung unter einer Stirnseite der Motorwelle diejenige Oberfläche der Motorwelle verstanden werden, welche die Motorwelle seitlich in Richtung der Drehachse begrenzt. Der Begriff Stirnfläche ist hierbei nicht auf eine ebene Oberfläche begrenzt, vielmehr kann die Stirnfläche jegliche Oberflächenkontur aufweisen.

In einer vorteilhaften Ausführungsform des erfindungsgemäßen Elektromotors ist der Elektromotor ein Außenläufermotor. In vorteilhafter Weise wird sich bei einer solchen Ausführungsform die abschirmende Wirkung des Rotors selbst zunutze gemacht.

Durch die in den Unteransprüchen aufgeführten Maßnahmen ergeben sich vorteilhafte Weiterbildungen und Verbesserungen der in den unabhängigen Ansprüchen gegebenen Merkmale.

Das erfindungsgemäße Lüftersystem beziehungsweise eine vorteilhafte Weiterbildung zeichnet sich dadurch aus, dass das Kontaktierelement einen ersten und einen zweiten Abschnitt aufweist, wobei der erste Abschnitt drehfest mit dem Rotor verbunden ist und der zweite Abschnitt an der Stirnfläche der Motorwelle drehbar anliegt.

Bevorzugterweise drückt der zweite Abschnitt in axialer Richtung mit einer Vorspannkraft auf die Stirnfläche der Motorwelle. Durch die Verwendung eines Kontaktierelementes mit einem zweiten Abschnitt, welcher in eingebautem Zustand in axialer Richtung eine Vorspannung aufweist, übt der zweite Abschnitt eine Druckkraft auf die Stirnfläche aus und bringt somit im Sinne einer Feder eine Rückstellkraft auf die Stirnfläche auf. Auf diese Weise kann eine dauerhafte Kontaktierung zwischen dem elastischen Element und der Stirnfläche der Motorwelle sichergestellt werden.

In diesem Zusammenhang ist unter der axialen Richtung im Wesentlichen die Erstreckungsrichtung der Drehachse zu verstehen. Hierbei ist es jedoch nicht notwendig, dass sie gesamte Anpresskraft, mit welcher der zweite Abschnitt auf die Stirnfläche drückt, in Richtung der Drehachse verläuft. Es ist auch denkbar, dass die Anpresskraft unter einem bestimmten Winkel zur Stirnfläche angeordnet ist und der Kraftvektor der Anpresskraft einen Anteil in Richtung der Drehachse und einen Anteil senkrecht zur Drehachse aufweist. Erfindungswesentlich ist hierbei lediglich, dass der Kraftvektor der Anpresskraft in axialer Richtung betragsmäßig am größten ist.

In einer besonders einfachen und kostengünstigen Ausführungsform der Erfindung ist das Kontaktierelement bandförmig ausgebildet und erstreckt sich in radialer Richtung. Auf diese Weise kann das im Lüfterrad befestigte Kontaktierelement auf besonders einfache und sichere Weise zwischen Rotor und Lüfterrad verspannt werden und im montierten Zustand die Motorwelle stirnseitig kontaktieren.

Unter bandförmig soll in diesem Zusammenhang insbesondere verstanden werden, dass eine Ausdehnung des Kontaktierelementes in der Haupterstreckungsrichtung ein Vielfaches, bevorzugt zumindest ein Zwanzigfaches, einer Ausdehnung des Kontaktierelementes in einer beliebigen Richtung senkrecht zur Haupterstreckungsrichtung beträgt. Besonders bevorzugt weist das Kontaktierelement in einer Schnittebene senkrecht zur Haupterstreckungsrichtung einen im Wesentlichen dreieckigen, rechteckförmigen oder trapezförmigen Querschnitt auf. Auch eine gewölbt rechteckförmige oder trapezförmige Querschnittsform ist denkbar.

Weiterhin soll in diesem Zusammenhang unter der Erstreckung in radialer Richtung verstanden werden, dass die Haupterstreckungsrichtung des Kontaktierelementes in radialer Richtung erfolgt. Es ist jedoch auch denkbar und zur Funktionserfüllung zweckmäßig, dass sich bestimmte Abschnitte des Kontaktierelementes anteilig in axialer Richtung erstrecken. Erfindungswesentlich ist hierbei lediglich, dass das Kontaktierelement eine Haupterstreckung in radialer Richtung aufweist.

In der Erfindung verklemmt das Lüfterrad den ersten Abschnitt des Kontaktierelementes mit dem Rotor drehfest. Zu diesem Zweck wird das Lüfterrad drehfest mit dem Rotor verbunden, wodurch das zwischen Rotor und Lüfterrad angeordnete Kontaktierelement verspannt wird. Das Lüfterrad wirkt dabei im Sinne eines Spannmittels auf das Kontaktierelement und drückt das Kontaktierelement gegen den Rotor. Der so bereitgestellte Kraftschluss verhindert ein Verdrehen des Kontaktierelementes im Betrieb. Es sei an dieser Stelle jedoch erwähnt, dass unter einer drehfesten Verbindung lediglich eine im Wesentlichen drehfeste Verbindung verstanden werden kann. So ist es beispielsweise denkbar, dass beim Anlaufen des Rotors das Kontaktierelement eine Rutschphase aufweist und erst im eingelaufenen Betrieb drehfest mit dem Rotor verbunden ist.

Eine besonders einfache und robuste Konstruktion des Kontaktierelementes innerhalb des vorgegebenen Gehäusebauraums kann dadurch umgesetzt werden, dass der zweite Abschnitt des erfindungsgemäßen Kontaktierelementes im Wesentlichen v- oder u-förmig ausgebildet, wobei sich an den zweiten Abschnitt jeweils radial ein erster Abschnitt anschließt.

Unter dem, in der vorliegenden Anmeldung verwendete Begriff "v-förmig", kann eine Ausformung des zweiten Abschnittes zu verstanden werden, die dem Buchstaben "v" des deutschen Alphabets ähnlich ist. Die Schenkel des v-förmigen zweiten Abschnittes des Kontaktierelementes müssen hierbei weder geradlinig verlaufen, noch müssen sie zu einer Spitze zusammenlaufen. Erfindungswesentlich ist lediglich, dass der bezogen auf die Drehachse mittige Bereich des v-förmigen zweiten Abschnittes in axialer Richtung beabstandet zu den bezogen auf die Drehachse jeweils distalen Bereichen des v-förmigen zweiten Abschnittes angeordnet ist. An die jeweils distalen Bereiche des v-förmigen Abschnittes schließen sich jeweils radial erste Abschnitte an.

Ebenso kann unter dem Begriff "u-förmig" eine Ausführungsform des zweiten Abschnittes verstanden werden, deren Form dem Buchstaben "u" des deutschen Alphabetes ähnlich ist. Auch hier ist es nicht entscheidend, dass die Schenkel des u-förmigen zweiten Abschnittes parallel verlaufen und in einer Krümmung zusammenführen. Erfindungswesentlich ist auch bei einer solchen Ausführungsform, dass der, bezogen auf die Drehachse, mittige Bereich des u-förmigen zweiten Abschnittes in axialer Richtung beabstandet zu den jeweils distalen Bereichen des u-förmigen zweiten Abschnittes angeordnet ist und sich jeweils radial an den zweiten Abschnitt erste Abschnitte anschließen. Auf diese Weise kann die axiale räumliche Distanz zwischen der Stirnseite der Motorwelle optimal überbrückt werden und das Kontaktierelement ist in der Lage eine für eine dauerhafte Kontaktierung ausreichend große Anpresskraft auf die Stirnseite der Motorwelle aufzubringen

Bevorzugt weist der zweite Abschnitt weiterhin einen sich in radialer Richtung erstreckenden, im Wesentlichen ebenen Kontaktbereich auf, wobei der Kontaktbereich schleifend an der Motorwelle anliegt.

Eine besonders einfache Fertigung und Handhabung kann sich dadurch ergeben, dass das erfindungsgemäße Kontaktierelement einteilig, insbesondere als Stanz- oder Stanzbiegeteil, ausgebildet ist. Die einteilige Ausführungsform des Kontaktierelements weist Vorteile bei der Herstellung sowie dem Montageaufwand und der Montagegeschwindigkeit auf. Die Verwendung der Stanzbeziehungsweise Stanzbiegetechnik ermöglicht eine kostengünstige Produktion des Kontaktierelements aus einem Bandmaterial in einem wirtschaftlichen und stabilen Fertigungsprozess.

Gegenüber einstückig aus Bauteilen des Elektromotors oder des Lüfterrades hergestellten Kontaktierelementen, weist ein solches erfindungsgemäßes Kontaktierelement als zusätzliches Bauteil den Vorteil auf, dass es aus einem anderen Material gefertigt werden kann, welches optimal auf seine Funktion dem Ausgleich von Potentialunterschieden ausgelegt ist, wobei die Materialanforderungen optimal an die Belastungszustände im Betrieb abgestimmt werden können.

In einer vorteilhaften Ausführungsform des erfindungsgemäßen Lüstersystems weist der Rotor bezogen auf die Motorwelle einen mittig angeordneten, sich in axialer Richtung erstreckenden, zylindrischen Lagersitz auf, wobei das erfindungsgemäße Kontaktierelement in den Lagersitz greift. Ein solcher Lagersitz ist dazu ausgelegt die Lagerung des Rotors aufzunehmen, sodass der Rotor und das Lüfterrad drehbar gelagert sind und ihre Position sowohl radial als auch axial festgelegt ist. Vorzugsweise ist der zylindrische beziehungsweise ringförmige Lagersitz als Aussparung oder Einbuchtung im Rotorgehäuse ausgebildet, sodass der Lagersitz durch einfaches Tiefziehen beziehungsweise in einem Spritzgussverfahren ausgebildet werden kann.

In diesem Zusammenhang kann unter dem Begriff "greifen" verstanden werden, dass das Kontaktierelement im montierten Zustand in axialer Richtung in den durch den Lagersitz gebildeten Raum ragt.

Bevorzugt weisen die ersten Abschnitte jeweils ein freies Ende auf, wobei das freie Ende am Lüfterrad befestigt ist. In diesem Kontext kann unter dem Begriff "befestigen" verstanden werden, dass das Kontaktierelement verliersicher im Lüfterrad angebracht ist, sodass das Kontaktierelement bei der Montage im Lüfterrad gehalten wird und als gemeinsame Einheit auf dem Rotor drehfest montiert werden kann. Ein solches verliersicheres Einbringen ermöglicht eine einfache und schnelle Handhabung und Montage des erfindungsgemäßen Lüftersystems.

In einer vorteilhaften Ausführungsform kann am Lüfterrad ein zu dem Lagersitz korrespondierendes Eingriffselement angeordnet sein, welches im montierten Zustand in den Lagersitz greift. Dies hat den Vorteil, dass das Lüfterrad besonders einfach zentriert werden kann, sodass das Lüfterrad exakt in Richtung der Drehachse ausgerichtet werden kann und somit eine geringere Geräuschanfälligkeit und Umwucht aufweist.

Bevorzugterweise sind die freien Enden der ersten Abschnitte in das Eingriffselement eingepresst, wobei unter dem Begriff eingepresst in diesem Zusammenhang ein verliersicheres Einbringen verstanden werden kann, sodass das Kontaktierelement bei der Montage wenn es der Schwerkraft ausgesetzt wird, nicht aus dem Lüfterrad beziehungsweise dem Eingriffselement fällt. Es ist auch denkbar, dass das Eingriffselement wenigstens eine Rippe aufweist, wobei die freien Enden der ersten Abschnitte in die durch die wenigstens eine Rippe gebildete Vertiefung im Sinne einer Biegelasche gebogen werden.

In einer weiteren besonders vorteilhaften Ausführungsform des erfindungsgemäßen Lüftersystems ist am zweiten Abschnitt des Kontaktierelementes ein sich in axialer Richtung ersteckender Schleifkontakt ausgeformt. Durch die Ausbildung eines Schleifkontaktes kann die Kontaktfläche zwischen der Stirnfläche der Motorwelle und dem Kontaktierelement minimiert werden. Dies kann sich insbesondere auf die Geräuschminimierung und Reibverluste positiv auswirken. Durch die Erstreckung des Schleifkontakts in axialer Richtung kann die für die entsprechende Anpresskraft in axialer Richtung benötigte Vorspannung gewährleistet werden.

Vorzugsweise ist der Schleifkontakt gewölbt ausgebildet. Eine derartige gewölbte Ausführungsform des Auflagebereichs kann besonders einfach und kostengünstig durch Zugdruckumformen des bandförmigen Kontaktierelementes gefertigt werden. Im Rahmen der vorliegenden Erfindung kann unter dem Begriff gewölbt jegliche Oberflächenkontur verstanden werden, welche eine Wölbung beziehungsweise Krümmung aufweist. Eine solche gewölbte Kontur kann beispielsweise durch einen Vorsprung gebildet werden, welcher eine konvexe beziehungsweise halbkugelförmige Form aufweist.

Der Effekt der minimierten Reibung kann sich in besonders bevorzugter Weise in einer weiteren Ausführungsform dadurch zunutze gemacht werden, dass die Stirnfläche der Motorwelle des erfindungsgemäßen Lüftersystems in Richtung der Drehachse zulaufend ausgebildet ist. Durch die zulaufende Stirnfläche verringert sich die Auflagefläche des Kontaktierelementes auf der Welle, wodurch die Reibung minimiert werden kann.

Eine solche Ausführungsform des erfindungsgemäßen Lüftersystems mit einer zulaufenden Stirnfläche der Motorwelle und/oder einem am zweiten Abschnitt des Kontaktierelementes angeordneten Schleifkontakt kann eine einfache und genaue Zentrierung des Kontaktierelementes ermöglicht werden, wodurch die Relativgeschwindigkeiten zwischen Kontaktierelement und Motorwelle im Bereich des Schleifkontaktes minimiert werden.

Bevorzugt ist das Kontaktierelement dazu ausgebildet, elektromagnetische Störstrahlung abzuleiten. Auf diese Weise kann die Emission der ungünstigen Störstrahlung reduziert werden.

### Zeichnung

Ausführungsbeispiele der Erfindung sind in den Figuren dargestellt und in der nachfolgenden Beschreibung näher erläutert. Es zeigen:
- Figur 1: eine schematische Darstellung eines erfindungsgemäßen Lüftersystems,
- Figur 2: einen Ausschnitt des erfindungsgemäßen Lüftersystems gemäß Figur 1,
- Figur 3: eine erste Ausführungsform des erfindungsgemäßen Kontaktierelementes in einer perspektivischen Darstellung,
- Figur 4: eine zweite Ausführungsform des erfindungsgemäßen Kontaktierelementes in einer perspektivischen Darstellung,
- Figur 5: eine perspektivische Darstellung einer Ausführungsform eines erfindungsgemäßen Lüfterrades,

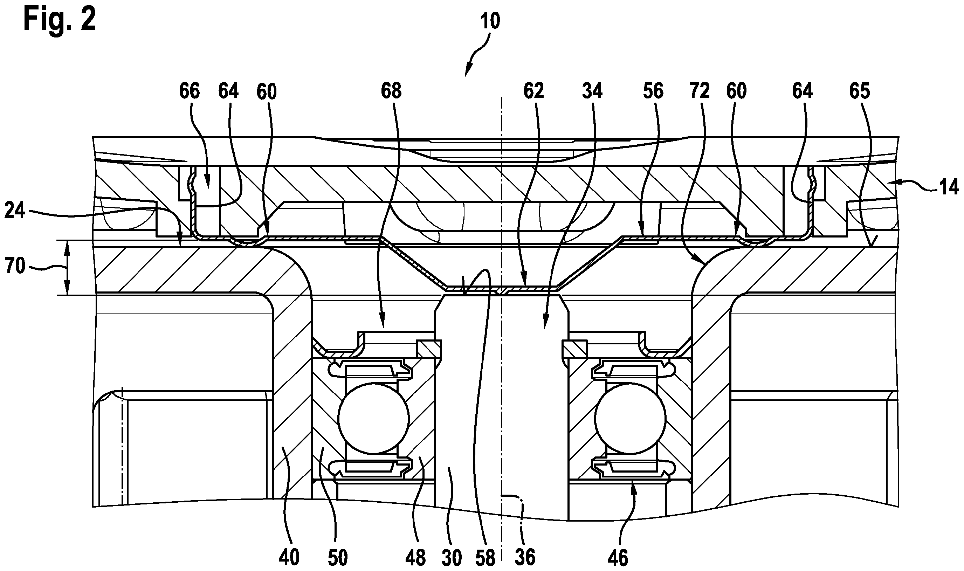

- Figur 2: eine schematische Darstellung einer Ausführungsform eines erfindungsgemäßen Lüftersystems.

### Beschreibung

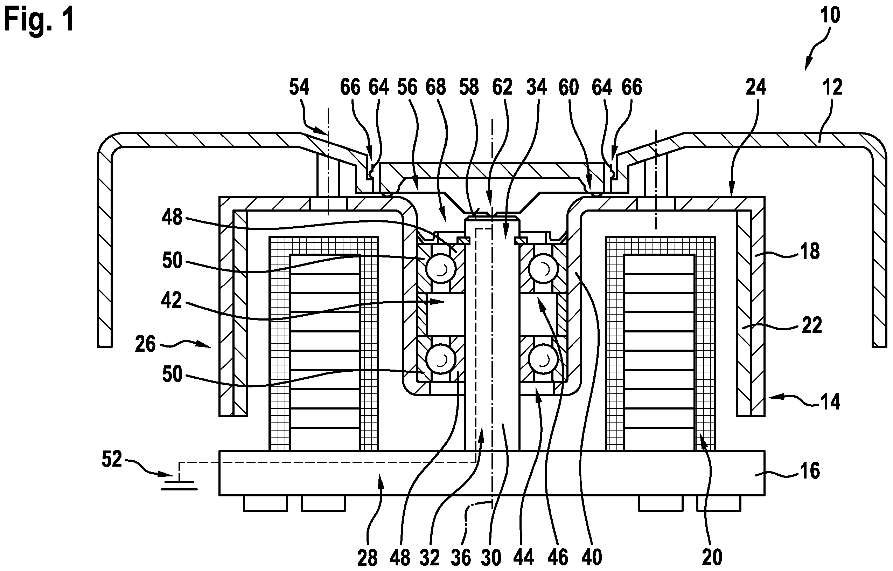

Figur 1 zeigt ein Lüftersystem 10 mit einem Elektromotor 12 und einem Lüfterrad 14. Das Lüfterrad 14 weist eine Vielzahl an Lüfterschaufeln auf, welche dafür ausgelegt sind bei Rotation des Lüfterrades 14 Kühlluft zu fördern. Der in Figur 1 gezeigte, beispielshaft als Außenläufer ausgebildete, Elektromotor 12 des Lüftersystems 10 weist ein feststehendes Teil, den Stator 16 und ein umlaufendes Teil, den Rotor 18 auf. Ein Elektromotor vom Typ eines Außenläufermotors, wie er beispielhaft in Figur 1 dargestellt ist, zeichnet sich dadurch aus, dass der radial innen liegende Teil im Betrieb fest steht, während der radial außen liegende Teil rotiert. Am Stator 16 ist eine Mehrzahl an Wicklungen 20 angeordnet. Der Rotor 18 wiederum weist Magnete 22 auf. Werden die Wicklungen 20 von Strom durchflossen, so treibt das magnetische Feld des Stators 16 den Rotor 18 an.

Es wird darauf hingewiesen, dass das Lüftersystem 10, insbesondere der Elektromotor 12 in Figur 1 nur schematisch dargestellt ist, da Aufbau und Funktionalität eines geeigneten Elektromotors 12 hinreichend aus dem Stand der Technik bekannt sind, sodass hier zwecks Knappheit und Einfachheit der Beschreibung auf eine eingehende Beschreibung des Lüftersystems 10 verzichtet wird. Des Weiteren wird darauf hingewiesen, dass der Elektromotor 12 des Lüftersystems 10 lediglich beispielhaft und nicht zur Einschränkung der Erfindung als Außenläufermotor dargestellt ist, da die Erfindung auch bei einem Innenläufermotor Anwendung finden kann.

Die Wicklungen 18 von Elektromotoren 12 werden im Betrieb in der Regel mit pulsweitenmodulierten Signalen gespeist, die Störfelder verursachen können. Die elektromagnetischen Störstrahlungen treten hierbei in der Regel an den Wicklungen 20 oder den Magneten 22 auf. Ausgehend von den Wicklungen 20 oder Magneten 22 können die Störstrahlungen zu einer Störung anderer elektronischer Systeme und Komponenten führen, welche in der Umgebung des Lüftersystems 10 angeordnet sind. Neben der Beeinflussung der Umgebungskomponenten durch den Elektromotor 12, können in umgekehrter Weise auch Störstrahlungen aus der Umgebung das Lüftersystem 10 in seiner Funktionalität beeinträchtigen. Der erfindungsgemäße Elektromotor 12 sollte daher Wicklungen 20 und Magnete 22 möglichst in allen Richtungen abschirmen.

Bei einem Elektromotor 12 vom Typ eines Außenläufers, wie er in Figur 1 dargestellt ist, kann eine solche Abschirmung unter anderem durch einen möglichst nahe am Stator 16 angeordneten Rotor 18 erzielt werden. Wie in Figur 1 deutlich zu erkennen ist, ist der Rotor 18 im Wesentlichen topfförmig ausgebildet. Diese topfförmige Ausführung des Rotors 18 bildet hierbei eine Abschirmung für die Wicklungen 20 und Magnete 22, welche innerhalb des topfförmigen Rotors 18 angeordnet sind. Der topfförmige Rotor 18 weist zu diesem Zweck einen sich in radialer Richtung erstreckenden ersten Abschnitt 24 auf. Dieser erste Abschnitt 24 des Rotors 18 bildet den Boden des topfförmigen Rotors 18. Neben des sich in radialer Richtung erstreckenden ersten Abschnittes 24 des Rotors 18, weist der Rotor 18 einen zweiten Abschnitt 26 auf, welcher am äußeren Rand des Rotors 18 angeordnet ist und eine umlaufende zylindrische Seitenwand des Rotors 18 bildet.

Der dem Boden 24 des topfförmigen Rotors 18 gegenüberliegende offene Bereich des Rotors 18 wird, wie in Figur 1 deutlich zu erkennen ist, durch einen Motorträger 28 abgeschirmt. Durch die Anordnung des topfförmigen Rotors 18 sowie des als Deckel fungierenden Motorträgers 28 ergibt sich ein im Wesentlichen abgeschlossener Raum für die Magnete 20 und Wicklungen 22, welcher in alle Richtungen durch elektrisch leitfähige Oberflächen abgeschirmt ist.

Bei der in Figur 1 dargestellten Ausführungsform, ist die Motorwelle 30 drehfest mit dem Motorträger 28 beziehungsweise mit dem Stator 16 verbunden. Eine solche drehfeste Verbindung kann insbesondere durch Einspritzen der Motorwelle 30 in den Motorträger 28 bereitgestellt werden. Wie in Figur 1 dargestellt ist, weist die Motorwelle 30 ein fest eingespanntes Ende 32, ein freies Ende 34 und eine Drehachse 36 auf, um welche der Rotor 18 mit dem Lüfterrad 14 und der Stator 16 zueinander drehbar gelagert sind.

Wie in Figur 1 dargestellt ist, verläuft die Drehachse 36 im Sinne einer sich ins Unendliche erstreckenden, gedachten Gerade insbesondere mittig durch die Motorwelle 30 und entspricht der Mittelachse der Motorwelle 30. Zur drehbaren Lagerung des Rotors 18 gegenüber dem Stator 16 um die Drehachse 36 ist am Rotor 18 an seiner der Motorwelle 30 zugewandten Seite ein zylindrischer Lagersitz 40 angeordnet, welcher sich in axiale Richtung erstreckt. Im Inneren des Lagersitzes 40 des Rotors 18 ist eine Lagerung 42 angeordnet. Wie in Figur 1 dargestellt ist, weist die Lagerung 42 zwei Lager 44, 46 auf, wobei beide Lager 44, 46 mit ihrem jeweiligen Außenring 50 im Lagersitz 40 des Rotors und mit ihrem entsprechenden Innenring 48 drehfest auf der Motorwelle 30 sitzen.

Läuft der Elektromotor 12 an, so wird der Rotor 18 in Rotation versetzt. Um das Lüfterrad 14 mitzunehmen, ist dieses drehfest auf dem Rotor 18 befestigt. Wie in Figur 1 schematisch angedeutet ist, kann hierzu der erste Abschnitt 24 des Rotors 18 über eine Schraubenverbindung 54 mit dem Lüfterrad 14 verbunden werden. Es sind jedoch auch andere Befestigungsmittel denkbar.

Um zu verhindern, dass der Rotor 18 die Funktion einer hochfrequenten Antenne übernimmt und das Störproblem gegebenenfalls verschlimmert, muss der Rotor 14 auf ein Massepotential 52 kontaktiert werden.

Um den Rotor 18 auf Massepotential 52 zu kontaktieren, muss der Rotor 18 mit der Motorwelle 30 elektrisch leitfähig verbunden werden, welche wiederum in den Motorträger 28 eingepresst ist und selbst aus einem elektrisch leitfähigen Material aufgebaut ist und somit an dem Massenpotential 52 anliegt. Eine solche Kopplung zwischen dem Rotor 18 und der Motorwelle 30 kann in der Regel nicht über die Lager 44, 46 selbst, einschließlich ihrer jeweiligen Lagerabdeckungen bereitgestellt werden, da diese einen mit Öl gefüllten Lagerspalt aufweisen, der zur Folge hat, dass keine ausreichend stabile Ohm'sche Verbindung bereitgestellt werden kann.

Um dennoch eine ausreichend stabile Ohm'sche Verbindung zwischen Rotor 18 und Motorwelle 30 bereitzustellen, ist am Lüfterrad 12 ein Kontaktierelement 56 aus einem elektrisch leitenden Material befestigt. Im montierten Zustand, wie er in Figur 1 dargestellt ist, liegt das Kontaktierelement 56 elektrisch kontaktierend am Rotor 18 und der Stirnfläche 58 der Motorwelle 30 an.

Zur Kontaktierung beider Bauteile -Rotor 18 und Motorwelle 30-, weißt das Kontaktierelement 56, wie in Figur 1 dargestellt, zwei Abschnitte 60, 62 auf. Der erste Abschnitt 60 des Kontaktierelementes ist hierbei drehfest mit dem ersten Abschnitt 24 des Rotors 18 verbunden, der zweite Abschnitt 62 liegt schleifend an der Stirnseite 58 der Motorwelle 30 an.

Wie in Figur 1 deutlich zu erkennen ist, klemmen die Bauteile Rotor 18 und Lüfterrad 14 im montierten Zustand den ersten Abschnitt 60 des bandförmigen Kontaktierelementes 56 im Sinne einer Klemmverbindung zwischen sich ein. Die Klemmverbindung zwischen Lüfterrad 14 und Kontaktierelement 56 wird durch die Schraubenverbindung 54 aufgebracht. Die Schraubenkräfte erzeugen eine Normalkraft und eine Umfangs- beziehungsweise Reibkraft auf das Kontaktierelement 56, sodass das Kontaktierelement 56 drehfest am Rotor 18 anliegt und eine stabile Ohm'sche Verbindung zwischen Kontaktierelement 56 und Rotor 18 geschaffen wird.

Wie in Figur 1 dargestellt ist, weist das erfindungsgemäße Kontaktierelement 56 an seinen ersten Abschnitten 60 jeweils ein freies Ende 64 auf. Diese freien Enden 64 sind am Lüfterrad 14 verliersicher befestigt. Bei der in Figur 1 dargestellten Ausführungsform sind die freien Enden 64 der ersten Abschnitte 60 zu diesem Zweck in korrespondierende Aufnahmenuten 66 des Lüfterrades 14 eingeclipst. Es sei jedoch an dieser Stelle ausdrücklich erwähnt, dass sich ein erfindungsgemäßes Lüftersystem 10 nicht auf eine solche Ausführungsform mit einem eingeclipsten Kontaktierelement 56 beschränkt. So sind jegliche Ausführungsformen, bei welchen das Kontaktierelement 56 in einem ersten Montageschritt verliersicher am Lüfterrad befestigt wird, denkbar und zur Funktionserfüllung ausreichend.

Bei der Montage wird das erfindungsgemäße Kontaktierelement 56 mit seinem zweiten Abschnitt 62 unter einer definierten Vorspannung eingebaut, sodass der zweite Abschnitt 62 des Kontaktierelementes 56 mit einer zur Funktionserfüllung ausreichenden Anpresskraft in axialer Richtung auf die Stirnfläche 58 der Motorwelle 30 gepresst wird. Mit anderen Worten das Kontaktierelement 56 wirkt im Sinne einer Feder, welche eine Rückstellkraft auf die Stirnfläche 58 aufbringt.

Figur 1 zeigt ein einteilig ausgebildetes Kontaktierelement 56, welches insbesondere als Stanzbiegeteil ausgebildet ist. Es sei an dieser Stelle jedoch erwähnt, dass das Kontaktierelement 56 nicht auf eine solche, in Figur 1 dargestellte Ausführungsform, begrenzt ist. So sind beispielsweise auch Ausführungsformen denkbar, bei welchen der erste und zweite Abschnitt 60, 62 zweiteilig hergestellt werden und in einem zusätzlichen Fertigungsschritt miteinander verbunden werden.

Figur 2 zeigt das erfindungsgemäße Kontaktierelement 56 analog zu Figur 1 in einer vergrößerten Darstellung. Wie oben beschrieben, ist das Kontaktierelement 56 als bandförmiges Element ausgebildet, welches sich im Wesentlichen in radialer Richtung, das heißt in einer Richtung senkrecht zur gedachten Drehachse 36 erstreckt. Wie in Figur 2 weiterhin zu erkennen ist, liegt das bandförmige Kontaktierelement 56 mit seinen beiden ersten Abschnitten 60 jeweils auf der Stirnfläche 65 des ersten Abschnittes 24 an und überbrückt den Innenraum 68, welcher von dem zylinderförmigen Lagersitz 40 umschlossen wird.

Wie in Figur 2 dargestellt ist, sind die Stirnfläche 58 der Motorwelle 30 und die Stirnfläche 65 des ersten Abschnittes 24 des Rotors 18 in axialer Richtung um einen Axialabstand 70 zueinander beabstandet. Die Motorwelle 30 endet hierbei mit ihrem freien Ende 34 im Innenraum 68 des zylinderförmigen Lagersitzes 40. Zur Überbrückung des Axialabstandes 70 ist der zweite Abschnitt 62 im Wesentlichen v-förmig ausgebildet. Auf diese Weise kann das erfindungsgemäße Kontaktierelement 56 den Axialabstand 70 überbrücken und sowohl an der Stirnfläche 65 des Rotors 18 als auch an der Stirnfläche 58 der Motorwelle 30 anliegen.

Es sei an dieser Stelle jedoch ausführlich erwähnt, dass auch andere Ausführungsformen des zweiten Abschnittes 62 den Kontaktierelementes 56 denkbar sind, welche dazu ausgebildet sind, den Axialabstand 70 zu überbrücken. So ist es beispielsweise auch denkbar, dass der zweite Abschnitt 62 u-förmig ausgebildet ist und mit seinem axial tiefsten Punkt an der Stirnseite 58 der Motorwelle 30 schleifend anliegt. Erfindungswesentlich ist hierbei lediglich, dass das Kontaktierelement 56 sowohl am Rotor 18 als auch an der Motorwelle 30 kontaktiert.

Ferner ist ein erfindungsgemäßes Lüftersystem 10 nicht auf ein solches Kontaktierelement 56 beschränkt, welches an der Stirnfläche 65 des ersten Abschnittes 24 des Rotors 18 anliegt. So ist es beispielsweise auch denkbar, dass das erfindungsgemäße Kontaktierelement 56 den Rotor 18 radial, beispielsweise am zylindrischen Lagersitz 40, kontaktiert oder das bandförmige Kontaktierelement 56 zur optimalen Positionierung und zum Ausgleich von Potentialunterschieden an der Krümmung 72 zwischen dem ersten Abschnitt 24 des Rotors 18 und dem Lagersitz 40 anliegt.

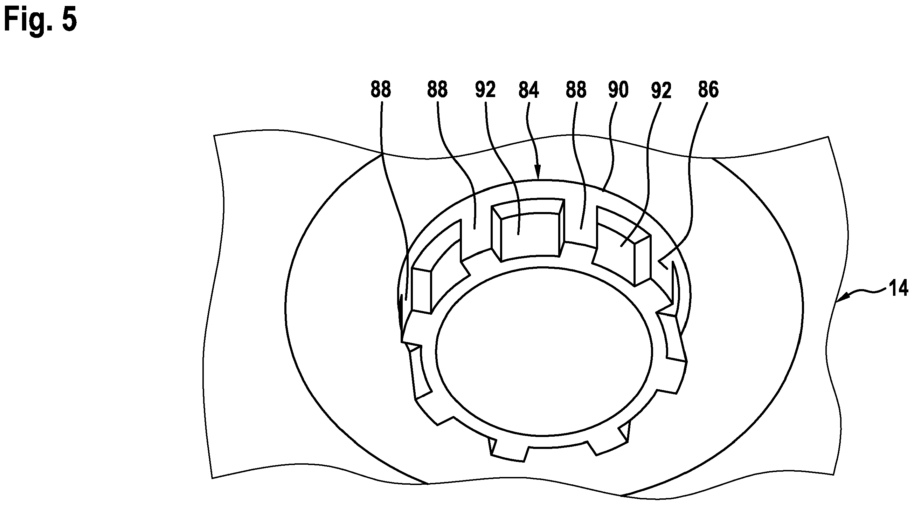

Insbesondere bei einer Ausführungsform, wie sie in Figur 5 beschrieben ist, mit einem zum Lagersitz 40 korrespondierenden Eingriffselement 84, welches am Lüfterrad 14 angeordnet ist, kann ein Kontaktierelement 56, das im montierten Zustand an der Krümmung 72 des Rotors 18 anliegt von dem Lüfterrad 14 mit dem entsprechenden Eingriffselement 84 verklemmt werden.

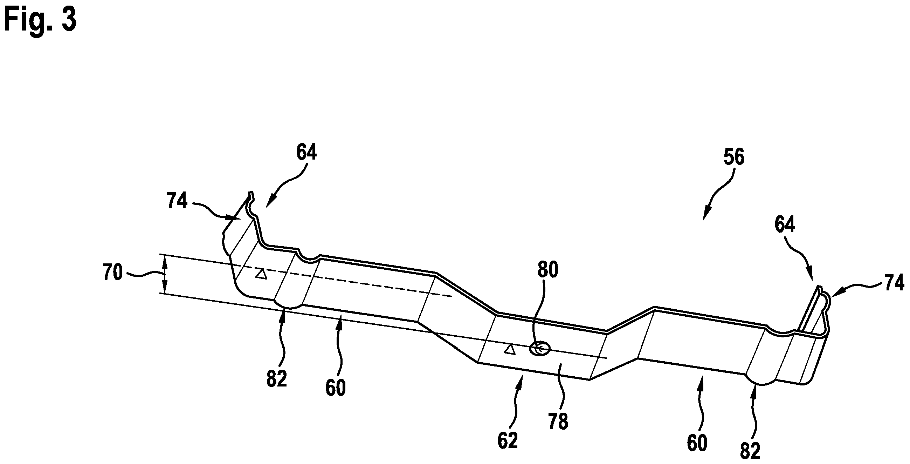

Wie bereits erläutert, schließt sich an den zweiten Abschnitt 62 radial jeweils ein erster Abschnitt 60 an. Dieser erste Abschnitt 60 liegt im montierten Zustand in einem Auflagebereich 82 (dargestellt in Figur 3) drehfest an am Rotor 18 an. Ferner weisen die ersten Abschnitte 60 jeweils freie Enden 64 auf. Diese freien Enden 64 sind am Lüfterrad 14 befestigt. Erfindungswesentlich ist hierbei, dass das Kontaktierelement 56 in einem ersten Fertigungsschritt am Lüfterrad 14 verliersicher befestigt wird und dann in einem zweiten Fertigungsschritt gemeinsam mit dem Lüfterrad 14 als eine Einheit so auf dem Rotor 18 angebracht wird, dass das Kontaktierelement 56 drehfest am Rotor 18 und drehbar an der Motorwelle 30 anliegt.

Bei der in Figur 2 dargestellten Ausführungsform sind die freien Enden 64 der ersten Abschnitte 60 des Kontaktierelementes 56, zum Zweck der verliersicheren Befestigung am Lüfterrad 14, umgebogen, sodass sie sich in axialer Richtung erstrecken. Die freien Enden 64 greifen hierbei in Aufnahmenuten 66 im Lüfterrad 14. Zur verliersicheren Befestigung weisen die freien Enden 64 jeweils einen Vorsprung 74 auf, welcher radial in einen entsprechenden Absatz 76 der Aufnahmenuten 66 ragt, sodass das Kontaktierelement 56 bei der Montage mit seinen freien Enden 64 in die Ausnehmung 65 geclipst wird. Die Hinterschneidung in radialer Richtung zwischen dem Absatz 76 und dem in radialer Richtung angeformten Vorsprung 74 der freien Enden 64 bildet bei der Montage einen entsprechenden Formschluss, sodass das Kontaktierelement 56 in axialer Richtung nicht aus dem Lüfterrad 14 herausfallen kann.

Die Vorsprünge 74 der freien Enden 64 sind bei der in Figur 2 dargestellten Ausführungsform als gewölbte Elemente beziehungsweise rinnenförmige Elemente ausgebildet. Erfindungsgemäß beschränken sich solche Vorsprünge 74 jedoch nicht auf eine solche gewölbte Ausführungsform. Es sind auch Ausführungsformen denkbar, die dazu geeignet sind einen entsprechenden Formschluss mit dem Absatz 76 beziehungsweise den Aufnahmenuten 66 einzugehen und in radialer Richtung in den entsprechenden Absatz 76 einzugreifen.

Wie in Figur 2 deutlich zu erkennen ist, weist der zweite v-förmige Abschnitt 62 einen sich in radialer Richtung erstreckenden, im Wesentlichen ebenen Kontaktbereich 78 auf, wobei der Kontaktbereich 78 schleifend an der Motorwelle 30 anliegt.

Um die Reibung zwischen dem zweiten Abschnitt 62 des Kontaktierelementes 56 und der Stirnfläche 58 der Motorwelle 30 zu minimieren und eine Auslenkung und damit einhergehend eine ausreichend große Rückstellkraft des zweiten Abschnittes 62 des Kontaktierelementes 56 bereitzustellen, ist am Kontaktbereich 78 mittig ein weiterer Vorsprung als Schleifkontakt 80 angeformt. Im montierten Zustand kontaktiert somit lediglich der Schleifkontakt 80 die Stirnseite 58 der Motorwelle 30.

Der Schleifkontakt 80 ist bei der in Figur 2 dargestellten Ausführungsform als ein in Axialrichtung gewölbtes, insbesondere als halbkugelförmiges Element ausgebildet, sodass durch die lediglich punktuelle Auflage die Auflagefläche des Kontaktierelementes 56 auf der Stirnfläche 58 minimiert wird. Erfindungsgemäß beschränkt sich ein solcher Schleifkontakt 80 jedoch nicht auf eine, wie in Figur 2 gezeigte, halbkugelförmige Ausführungsform. Es sind auch andere zulaufende Formen denkbar, die dazu geeignet sind, die Stirnfläche 58 in einem möglichst kleinen Auflagebereich stirnseitig axial zu kontaktieren.

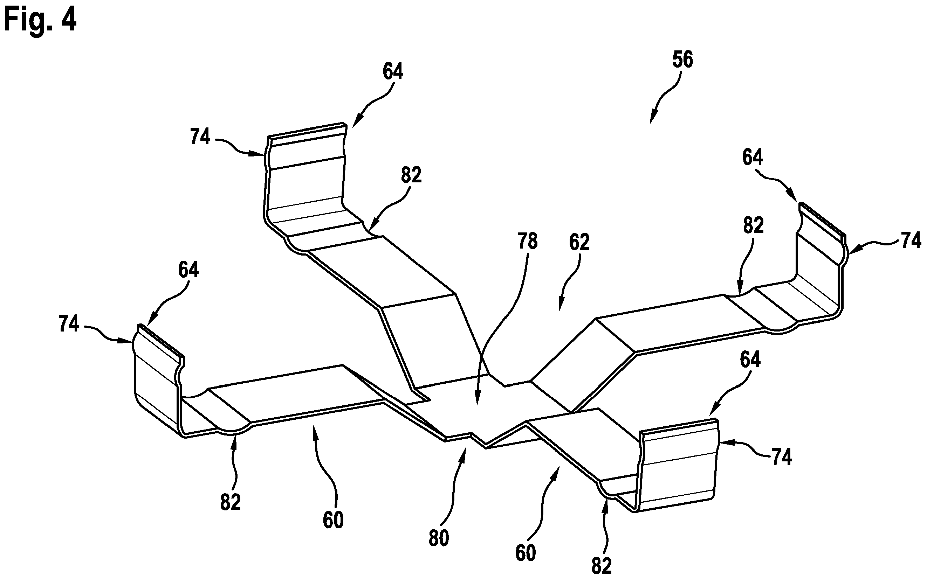

Die folgenden Figuren 3 und 4 zeigen jeweils eine perspektivische Darstellung eines erfindungsgemäßen Kontaktierelementes 56.

Figur 3 zeigt das bandförmige Kontaktierelement 56 analog zu den Figuren 1 und 2. An den mittig angeordneten, im Wesentlichen v-förmigen zweiten Abschnitt 62 schließen sich jeweils beidseitig erste Abschnitte 60 an. Diese ersten Abschnitte 60 sind dazu ausgebildet im montierten Zustand an der Stirnfläche 65 des Rotors 18 anzuliegen. Die Haupterstreckungsrichtung des Kontaktierelementes 56, wie es in Figur 3 dargestellt ist, erstreckt sich in radialer Richtung. Zur verliersicheren Befestigung des Kontaktierelementes 56 im Lüfterrad 14 sind die jeweils freien Enden 64 um 90° aus der radialen Haupterstreckungsrichtung ausgelenkt. Die freien Enden 64 greifen dabei im montierten Zustand in entsprechende Aufnahmenuten 66 im Lüfterrad 14.

An den freien Enden 64 sind, wie in Figur 3 deutlich zu erkennen ist, Vorsprünge 74 angebracht, welche sich wiederum in radialer Richtung erstrecken. Diese Vorsprünge 74 bilden im eingeclipsten Zustand einen Formschluss mit einem in der Aufnahmenuten 66 angeformten Absatz 76 (dargestellt in Figur 2).

Wie in Figur 3 ebenfalls deutlich zu erkennen ist, weist das erfindungsgemäße Kontaktierelement 56 mittig einen ebenen, sich in radialer Richtung erstreckenden Kontaktbereich 78 auf. Mittig am Kontaktbereich 78 ist ein sich in axialer Richtung erstreckender Vorsprung als Schleifkontakt 80 angeformt. Bei der in Figur 3 gezeigten Ausführungsform weist der Schleifkontakt 80 eine halbkugelförmige Kontur auf.

Wie bereits erläutert, liegt das Kontaktierelement 56 im montierten Zustand sowohl schleifend an der Motorwelle 30 als auch drehfest am Rotor 18 an. Zu diesem Zweck weisen die ersten Abschnitte 60 jeweils ein Auflageelement 82 auf, welche an den jeweiligen ersten Abschnitt 60 angeformt sind und vorzugsweise gewölbt beziehungsweise rinnenförmig ausgebildet sind. Im montierten Zustand verklemmt somit, wie bereits oben beschrieben, das Lüfterrad 14 die ersten Abschnitte 60 des Kontaktierelementes 56 mit dem Rotor 18, beziehungsweise der Stirnfläche 65 des Rotors 18. Dabei wird das entsprechende Auflageelement 82 auf den Rotor 18 gepresst, wodurch eine stabile Ohm'sche Verbindung zwischen Rotor 18 und Kontaktierelement 56 bereitgestellt werden kann.

Figur 4 zeigt eine weitere Ausführungsform eines erfindungsgemäßen Kontaktierelementes 56, welches in einem ersten Fertigungsschritt im Lüfterrad 14 befestigt wird und in einem zweiten Fertigungsschritt gemeinsam mit dem Lüfterrad 14 so drehfest mit dem Elektromotor 12 verbunden wird, dass das Kontaktierelement 56 mit seinen ersten Abschnitten 60 drehfest am Rotor 18 anliegen und mit seinem zweiten Abschnitt 62 schleifend an der Motorwelle 30 kontaktiert.

Wie in Figur 4 zu erkennen ist, weist das Kontaktierelement 56 zwei im Wesentlichen bandförmige Einheiten analog zu Figur 3 auf, welche kreuzförmig übereinander gelegt sind. Ausgehend von dem mittig angeordneten zweiten Abschnitt 62, welcher im montierten Zustand schleifend an der Motorwelle 30 anliegt, erstrecken sich vier erste Abschnitte 60 in radialer Richtung. Analog zu Figur 3 weist auch das Kontaktierelement 56 aus Figur 4 einen mittig angeordneten, ebenen, sich in radialer Richtung erstreckenden Kontaktbereich 78 auf. Mittig am Kontaktbereich 78 ist ebenfalls ein sich in axialer Richtung erstreckender Schleifkontakt 80 angeformt, welcher aufgrund der gewählten Perspektive in Figur 4 verdeckt dargestellt ist.

Analog zu der Ausführungsform des Kontaktierelementes 56 aus Figur 3, weisen die vier ersten Abschnitte 62 jeweils ein umgebogenes, freies Ende 64 mit einem rinnenförmigen Vorsprung 74 zur Befestigung im Rotor auf. Wie bereits erläutert liegt das Kontaktierelement 56 im montierten Zustand sowohl schleifend an der Motorwelle 30 als auch drehfest am Rotor 18 an. Zu diesem Zweck weisen die vier ersten Abschnitte 60 jeweils ein Auflageelement 82 auf, welche an die jeweils ersten Abschnitte 60 angeformt sind und vorzugsweise gewölbt beziehungsweise rinnenförmig ausgebildet sind. Im montierten Zustand verklemmt somit, wie bereits erläutert, das Lüfterrad 14 die vier ersten Abschnitte 60 des Kontaktierelementes 56 mit dem Rotor 18, beziehungsweise der Stirnfläche 65 des Rotors 18. Dabei werden die vier Auflageelemente 82 auf den Rotor 18 gepresst, wodurch eine stabile Ohm'sche Verbindung zwischen Rotor 18 und Kontaktierelement 56 bereitgestellt werden kann. Durch die Verwendung von vier Auflagebereichen 82 kann die kontaktierende Fläche erhöht werden um die Ohm'sche Verbindung zu verbessern.

Es sei an dieser Stelle angemerkt, dass die Anzahl der ersten Abschnitte 62 beliebig variiert werden kann. So kann beispielsweise durch eine zusätzliche Erhöhung der Anzahl an ersten Abschnitten 62 die Auflagefläche vergrößert werden.

Figur 5 zeigt einen Ausschnitt einer perspektivischen Darstellung einer weiteren Ausführungsform des Lüfterrades 14. In Figur 5 ist die, im montierten Zustand dem Elektromotor 12 zugewandte Seite, dargestellt und zeigt den mittig im Bereich der Motorwelle 30 angeordneten Ausschnitt des Lüfterrades 14.

Wie in Figur 5 zu erkennen ist, ist am Lüfterrad 14 ein ringförmiges Eingriffselement 84 angeordnet, welches sich im montierten Zustand in axialer Richtung, also in Richtung der Motorwelle 30 erstreckt. Dieses umlaufende, kragenförmige Eingriffselement 84 greift im montierten Zustand in den Lagersitz 40 des Rotors 18 ein. Vorzugsweise liegt dabei die Außenfläche 86 des Eingriffselementes 84 an der sich in axialer Richtung erstreckenden Wandung des Lagersitzes 40 im Sinne einer Wellen-Naben-Verbindung an und bildet somit eine kraft- und formschlüssige Verbindung zwischen Rotor 18 und Lüfterrad 14. Ein solches Eingriffselement 84 ermöglicht eine exakte Zentrierung des Lüfterrades 14.

Das Eingriffselement 84 weist, wie in 5 dargestellt, mehrere Rippen 88 auf, die parallel zur Drehachse 36 des Lüfterrades 14 beziehungsweise des Rotors 18 ausgerichtet sind. Die Rippen 88 sind in Umfangsrichtung gleichmäßig um die Drehachse 36 am Lüfterrad 14 verteilt. Eine ungleichmäßige Anordnung ist auch denkbar. Die Rippen 88 sind in einem oberen Abschnitt durch einen ringförmigen Abschnitt 90 verbunden. Der ringförmige Abschnitt 90 sorgt dadurch für eine axiale Stabilisierung der Rippen 88. Der ringförmige Abschnitt 90 kann alternativ auch als teilringförmiger Abschnitt 90 ausgebildet sein und nur einen Teil der Rippen 88 jeweils miteinander verbinden. Die Rippen 88 sind in der Ausführungsform teilringförmig in Umfangsrichtung ausgebildet und ausgerichtet. Ferner erstrecken sie sich in axialer Richtung parallel zur Drehachse 36. Es sind aber auch andere Querschnitte, wie dreieckig, rechteckig oder kreisförmig, denkbar. Die sich in axialer Richtung erstreckenden Rippen schließen in Umfangsrichtung jeweils eine Vertiefung 92 zwischen sich ein. In diese Vertiefungen 92 können, in einer weiteren Ausführungsform des erfindungsgemäßen Lüftersystems 10, die freien Enden 64 des bandförmigen Kontaktierelementes 56 eingepresst und somit verliersicher mit dem Lüfterrad 14 verbunden werden.

Vorzugsweise ist die radiale Tiefe der Vertiefungen 92 so diemsioniert, dass das eingelegte bandförmige Kontaktierelement bündig oder mit Übermaß mit der Außenfläche 86 des Eingriffselementes 84 abschließt, sodass im montierten Zustand das Kontaktierelement 56 in den Lagersitz 40 gepresst wird. Durch die so aufgebrachte Flächenpressung zwischen den freien Enden 64 des Kontaktierelementes 56 und dem Lagersitz 40 des Rotors 18 kann eine stabile Ohm'sche Verbindung zum Ausgleichen von Potentialunterschieden zwischen Rotor 18 und Stator 16 bereitgestellt werden.

Es sei an dieser Stelle erwähnt, dass Anzahl und Form der hier dargestellten Rippen 88 beliebig variiert werden kann. Weiterhin ist es auch denkbar, dass die freien Enden 64 des erfindungsgemäßen Kontaktierelementes 56 in axialer Richtung über die Vertiefung 92 herausragen, sodass im montierten Zustand das erfindungsgemäße Kontaktierelement 56 an die Krümmung 72 des Rotors 18 angepresst wird.

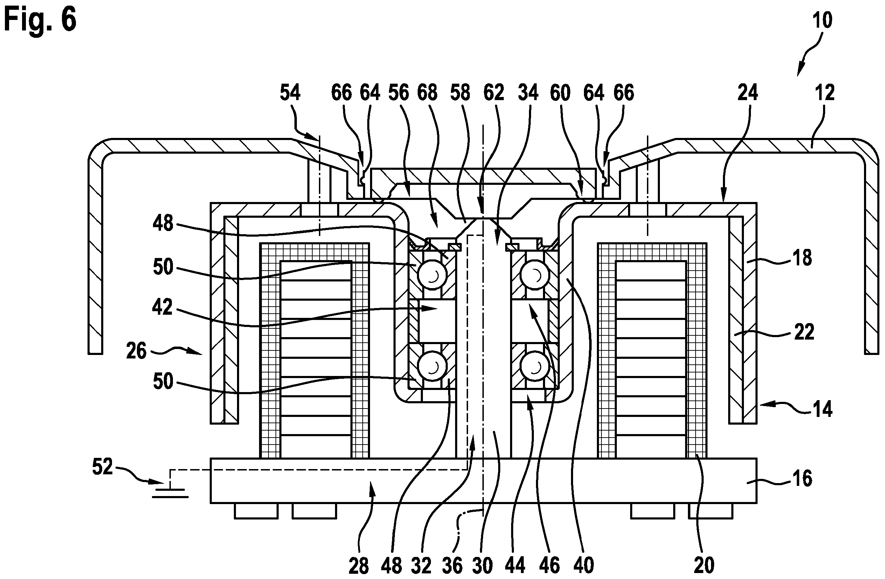

Figur 6 zeigt eine weitere Ausführungsform des erfindungsgemäßen Lüftersystems 10. Figur 6 entspricht der Ausführungsform gemäß Figur 1 mit dem Unterschied, dass die Stirnfläche 58 der Motorwelle 30 in Erstreckungsrichtung der Drehachse 36 zulaufend ausgebildet ist. Mit anderen Worten die Motorwelle 30 weist an seinem freien Ende 34 eine kegel- beziehungsweise kegelstumpfförmige Form auf. Durch die Ausgestaltung einer symmetrisch zur Drehachse 36 hin zulaufenden Stirnfläche 58 kann eine toleranzgenaue Zentrierung des Kontaktierelementes 56 gewährleitet werden, wodurch Relativgeschwindigkeiten zwischen Kontaktierelement 56 und Motorwelle 30 im Auflagebereich minimiert sind.

Neben einer, wie in Figur 6 dargestellten, rotationssymmetrischen, zulaufenden Stirnfläche 58, bei welcher die Stirnfläche 58 zu einem wesentlichen Teil abgeschrägt wurde, sind auch weitere zulaufende Formen, wie beispielsweise eine gewölbte oder halbkreisförmige Stirnfläche 58 denkbar und zur Funktionserfüllung ausreichend.

Es sei angemerkt, dass hinsichtlich der in den Figuren und in der Beschreibung gezeigten Ausführungsbeispiele vielfältige Kombinationsmöglichkeiten der einzelnen Merkmale untereinander möglich sind. So kann beispielsweise die Ausgestaltung der Stirnfläche und/oder des anliegenden Vorsprungs an die zulässige Relativgeschwindigkeiten, Reibwerte und Quietschgeräusche angepasst werden. Auch die Ausgestaltung des Kontaktierelements als einteiliges beziehungsweise zweiteiliges Bauteil kann an Produktanforderungen wie beispielsweise die Kosten des Bauteils oder die Nachrüstbarkeit eines bestehenden Systems angepasst werden.

## Patentansprüche

1. Lüftersystem (10) mit einem Elektromotor (12), wobei der Elektromotor (12) einen Rotor (18) aufweist und der Rotor (18) um eine Motorwelle (30), welche eine Stirnfläche (58) aufweist, drehbar gelagert ist, wobei auf dem Rotor (18) ein Lüfterrad (14) drehfest angeordnet ist, **dadurch gekennzeichnet, dass** am Lüfterrad (14) ein Kontaktierelement (56) befestigt ist, welches dazu ausgebildet ist im montierten Zustand an der Stirnfläche (58) der Motorwelle (30) und dem Rotor (18) elektrisch kontaktierend anzuliegen, wobei das Kontaktierelement (56) einen ersten und einen zweiten Abschnitt (60, 62) aufweist, wobei der erste Abschnitt (60) drehfest mit dem Rotor (18) verbunden ist und der zweite Abschnitt (62) an der Stirnfläche (58) der Motorwelle (30) drehbar anliegt und wobei das Lüfterrad (14) den ersten Abschnitt (60) mit dem Rotor (18) drehfest verklemmt.

2. Lüftersystem (10) nach einem der vorhergehenden Ansprüche, **dadurch gekennzeichnet, dass** der zweite Abschnitt (62) in axialer Richtung mit einer Vorspannkraft auf die Stirnfläche (58) der Motorwelle (30) drückt.

3. Lüftersystem (10) nach einem der vorhergehenden Ansprüche, **dadurch gekennzeichnet, dass** das Kontaktierelement (56) bandförmig ausgebildet ist und sich in radialer Richtung erstreckt.

4. Lüftersystem (10) nach einem der vorhergehenden Ansprüche, **dadurch gekennzeichnet, dass** der zweite Abschnitt (62) im Wesentlichen v- oder u-förmig ausgebildet ist und sich an den zweiten Abschnitt (62) jeweils radial ein erster Abschnitt (60) anschließt.

5. Lüftersystem (10) nach einem der vorhergehenden Ansprüche, **dadurch gekennzeichnet, dass** der zweite Abschnitt (62) einen sich in radialer Richtung erstreckenden, im Wesentlichen ebenen Kontaktbereich (78) aufweist, wobei der Kontaktbereich (78) schleifend an der Motorwelle (30) anliegt.

6. Lüftersystem (10) nach einem der vorhergehenden Ansprüche, **dadurch gekennzeichnet, dass** das Kontaktierelement (56) einteilig, insbesondere als Stanzbiegeteil ausgebildet ist.

7. Lüftersystem (10) nach einem der vorhergehenden Ansprüche, **dadurch gekennzeichnet, dass** der Rotor (18) bezogen auf die Motorwelle (30) einen mittig angeordneten, sich in axialer Richtung erstreckenden, zylindrischen Lagersitz (40) aufweist, wobei das Kontaktierelement (56) in den Lagersitz (40) greift.

8. Lüftersystem (10) nach einem der vorhergehenden Ansprüche, **dadurch gekennzeichnet, dass** die ersten Abschnitte (60) jeweils ein freies Ende (64) aufweisen, wobei das freie Ende (64) am Lüfterrad (14) befestigt ist.

9. Lüftersystem (10) nach einem der Ansprüche 7 oder 9, **dadurch gekennzeichnet, dass** am Lüfterrad (14) ein zu dem Lagersitz (40) korrespondierendes Eingriffselement (84) angeordnet ist, wobei das Eingriffselement (84) im montierten Zustand in den Lagersitz (40) greift.

10. Lüftersystem (10) nach Anspruch 9, **dadurch gekennzeichnet, dass** das die freien Enden (64) der ersten Abschnitte (60) in das Eingriffselement (84) gepresst sind.

11. Lüftersystem (10) nach einem der vorhergehenden Ansprüche, **dadurch gekennzeichnet, dass** am zweiten Abschnitt (62) des Kontaktierelementes (56) ein sich in axialer Richtung erstreckender Schleifkontakt (80) ausgeformt ist.

12. 13. Lüftersystem (10) nach Anspruch 12, **dadurch gekennzeichnet, dass** der Schleifkontakt (80) gewölbt ausgebildet ist.

13. Lüftersystem (10) nach einem der vorhergehenden Ansprüche, **dadurch gekennzeichnet, dass** die Stirnfläche (58) der Motorwelle (30) in axialer Richtung zulaufend ausgebildet ist.

14. Verfahren zur Herstellung eines Lüftersystems (10) gemäß der Ansprüche 1 bis 13, mit folgenden Verfahrensschritten:
- Befestigen eines Kontaktierelementes (56) in einem Lüfterrad (14)
- Drehfestes Koppeln des Lüfterrades (14) mit einem Rotor (18), wobei das Kontaktierelement (56) im Wesentlichen drehfest mit dem Rotor (18) verklemmt wird und wobei das Kontaktierelement (56) drehbar an einer Stirnfläche (58) einer Motorwelle (30) anliegt.

## Claims

1. Fan system (10) comprising an electric motor (12), wherein the electric motor (12) has a rotor (18) and the rotor (18) is mounted so as to rotate about a motor shaft (30) which has an end face (58), wherein a fan impeller (14) is arranged in a rotationally fixed manner on the rotor (18), **characterized in that** a contact-making element (56) is fastened to the fan impeller (14), which contact-making element is designed, in the mounted state, to bear against the end face (58) of the motor shaft (30) and the rotor (18) in an electrical contact-making manner, wherein the contact-making element (56) has a first and a second section (60, 62), wherein the first section (60) is connected in a rotationally fixed manner to the rotor (18) and the second section (62) bears in a rotatable manner against the end face (58) of the motor shaft (30), and wherein the fan impeller (14) clamps the first section (60) to the rotor (18) in a rotationally fixed manner.

2. Fan system (10) according to one of the preceding claims, **characterized in that** the second section (62) presses onto the end face (58) of the motor shaft (30) with a prestressing force in the axial direction.

3. Fan system (10) according to either of the preceding claims, **characterized in that** the contact-making element (56) is of strip-like design and extends in the radial direction.

4. Fan system (10) according to one of the preceding claims, **characterized in that** the second section (62) is of substantially v- or u-shaped design and a first section (60) respectively radially adjoins the second section (62).

5. Fan system (10) according to one of the preceding claims, **characterized in that** the second section (62) has a substantially planar contact region (78) which extends in the radial direction, wherein the contact region (78) bears against the motor shaft (30) in a sliding manner.

6. Fan system (10) according to one of the preceding claims, **characterized in that** the contact-making element (56) is of one-part design, in particular in the form of a stamped-and-bent part.

7. Fan system (10) according to one of the preceding claims, **characterized in that** the rotor (18), with respect to the motor shaft (30), has a cylindrical bearing seat (40) which is arranged centrally and extends in the axial direction, wherein the contact-making element (56) engages into the bearing seat (40).

8. Fan system (10) according to one of the preceding claims, **characterized in that** the first sections (60) each have a free end (64), wherein the free end (64) is fastened to the fan impeller (14).

9. Fan system (10) according to either of Claims 7 and 9, **characterized in that** an engagement element (84) which corresponds to the bearing seat (40) is arranged on the fan impeller (14), wherein the engagement element (84), in the mounted state, engages into the bearing seat (40).

10. Fan system (10) according to Claim 9, **characterized in that** the the free ends (64) of the first sections (16) are pressed into the engagement element (84).

11. Fan system (10) according to one of the preceding claims, **characterized in that** a sliding contact (80) which extends in the axial direction is formed on the second section (62) of the contact-making element (56).

12. 13. Fan system (10) according to Claim 12, **characterized in that** the sliding contact (80) is of curved design.

13. Fan system (10) according to one of the preceding claims, **characterized in that** the end face (58) of the motor shaft (30) is designed so as to taper in the axial direction.

14. Method for producing a fan system (10) according to Claims 1 to 13, comprising the following method steps:
fastening a contact-making element (56) in a fan impeller (14)
coupling the fan impeller (14) in a rotationally fixed manner to a rotor (18), wherein the contact-making element (56) is clamped in a substantially rotationally fixed manner to the rotor (18) and wherein the contact-making element (56) bears in a rotatable manner against an end face (58) of a motor shaft (30).

## Revendications

1. Système de ventilateur (10) muni d'un moteur électrique (12), le moteur électrique (12) comprenant un rotor (18) et le rotor (18) étant monté de manière rotative autour d'un arbre moteur (30), qui présente une surface frontale (58), une roue de ventilateur (14) étant agencée de manière immobile en rotation sur le rotor (18), **caractérisé en ce qu'**un élément de mise en contact (56) est fixé sur la roue de ventilateur (14), lequel est configuré de manière, à l'état monté, à reposer en contact électrique sur la surface frontale (58) de l'arbre moteur (30) et le rotor (18), l'élément de mise en contact (56) présentant une première et une deuxième section (60, 62), la première section (60) étant reliée de manière immobile en rotation avec le rotor (18) et la deuxième section (62) reposant de manière rotative sur la surface frontale (58) de l'arbre moteur (30), et la roue de ventilateur (14) bloquant la première section (60) avec le rotor (18) de manière immobile en rotation.

2. Système de ventilateur (10) selon l'une quelconque des revendications précédentes, **caractérisé en ce que** la deuxième section (62) presse dans la direction axiale avec une force de précontrainte sur la surface frontale (58) de l'arbre moteur (30).

3. Système de ventilateur (10) selon l'une quelconque des revendications précédentes, **caractérisé en ce que** l'élément de mise en contact (56) est configuré en forme de bande et s'étend dans la direction radiale.

4. Système de ventilateur (10) selon l'une quelconque des revendications précédentes, **caractérisé en ce que** la deuxième section (62) est configurée essentiellement en forme de v ou de u, et une première section (60) se raccorde à chaque fois radialement à la deuxième section (62).

5. Système de ventilateur (10) selon l'une quelconque des revendications précédentes, **caractérisé en ce que** la deuxième section (62) présente une zone de contact essentiellement plane (78), s'étendant dans la direction radiale, la zone de contact (78) reposant sur l'arbre moteur (30) de manière frottante.

6. Système de ventilateur (10) selon l'une quelconque des revendications précédentes, **caractérisé en ce que** l'élément de mise en contact (56) est configuré d'un seul tenant, notamment en tant que pièce découpée et pliée.

7. Système de ventilateur (10) selon l'une quelconque des revendications précédentes, **caractérisé en ce que** le rotor (18) présente un siège de palier cylindrique (40), s'étendant dans la direction axiale, agencé au centre par rapport à l'arbre moteur (30), l'élément de mise en contact (56) s'engageant dans le siège de palier (40).

8. Système de ventilateur (10) selon l'une quelconque des revendications précédentes, **caractérisé en ce que** les premières sections (60) présentent chacune une extrémité libre (64), l'extrémité libre (64) étant fixée à la roue de ventilateur (14).

9. Système de ventilateur (10) selon l'une quelconque des revendications 7 ou 9, **caractérisé en ce qu'**un élément d'engagement (84) correspondant au siège de palier (40) est agencé sur la roue de ventilateur (14), l'élément d'engagement (84) s'engageant à l'état monté dans le siège de palier (40).

10. Système de ventilateur (10) selon la revendication 9, **caractérisé en ce que** la les extrémités libres (64) des premières sections (60) sont pressées dans l'élément d'engagement (84).

11. Système de ventilateur (10) selon l'une quelconque des revendications précédentes, **caractérisé en ce qu'**un contact frottant (80) s'étendant dans la direction axiale est formé sur la deuxième section (62) de l'élément de mise en contact (56).

12. 13. Système de ventilateur (10) selon la revendication 12, **caractérisé en ce que** le contact frottant (80) est configuré sous forme bombée.

13. Système de ventilateur (10) selon l'une quelconque des revendications précédentes, **caractérisé en ce que** la surface frontale (58) de l'arbre moteur (30) est configurée pour s'effiler dans la direction axiale.

14. Procédé de fabrication d'un système de ventilateur (10) selon les revendications 1 à 13, comprenant les étapes de procédé suivantes :
- la fixation d'un élément de mise en contact (56) dans une roue de ventilateur (14),
- le couplage immobile en rotation de la roue de ventilateur (14) avec un rotor (18), l'élément de mise en contact (56) étant bloqué de manière essentiellement immobile en rotation avec le rotor (18), et l'élément de mise en contact (56) reposant de manière rotative sur une surface frontale (58) d'un arbre moteur (30).
